# FASCICULE DE BREVET EUROPEEN

(11) **EP 1 098 524 B1**
(45) Date de publication et mention de la délivrance du brevet: **06.03.2013**
(21) Numéro de dépôt: 00410135.8
(22) Date de dépôt: 02.11.2000
(51) Int. Cl.: H04N 7/26, H04N 7/50

(54) **Circuit de décodage MPEG et d'affichage d'images et d'images incrustées**
MPEG Decoderschaltung und Bild- sowie Bild-in-Bildwiedergabe
MPEG decoder circuit and image and picture-in-picture display

(30) Priorité: 03.11.1999 FR 9914009
(43) Date de publication de la demande: 09.05.2001
(73) Titulaire: STMicroelectronics S.A., 92120 Montrouge (FR)
(72) Inventeur: Marty, Pierre, 38180 Seyssins (FR)
(74) Mandataire: de Beaumont, Michel

(56) Documents cités:
- EP-A- 0 778 709
- EP-A- 0 782 345
- EP-A- 0 794 673
- WO-A-98/26606
- US-A- 5 598 222
- US-A- 5 635 985
- US-A- 5 969 768

## Description

La présente invention concerne des circuits de décompression de séquences d'images, codées selon la norme MPEG et destinées à être fournies à un circuit d'affichage, et plus particulièrement un circuit intégré permettant d'afficher sur un écran des images incrustées dans des images principales.

Le brevet US 5635985 décrit un décodeur vidéo permettant l'affichage d'images incrustées dans des images principales.

Le brevet US5969768 décrit un décodeur vidéo permettant l'affichage d'images incrustées dans des images principales et comportant un décodeur MPEG, une mémoire, un circuit d'affichage et un filtre numérique.

La norme de codage MPEG permet de mémoriser les images d'une séquence d'images numériques dans un espace mémoire réduit. Le codage MPEG prévoit de numériser les images d'une séquence selon trois catégories. Les images extrêmes de la séquence sont codées de façon autonome et sont appelées images "intra". Un certain nombre d'images intermédiaires, appelées images "prédites" sont codées en tenant compte de leurs différences avec l'image intra ou prédite qui les précède. Les autres images, appelées "images bidirectionnelles" sont codées en tenant compte des images intra ou prédites qui les encadrent. Au niveau du décodeur on stocke des séquences d'images codées dans une première mémoire et deux images successives intra/prédite décodées dans une mémoire tampon. La première mémoire et la mémoire tampon sont habituellement deux zones d'une même mémoire dans laquelle le décodeur MPEG peut venir lire et écrire par l'intermédiaire d'un bus.

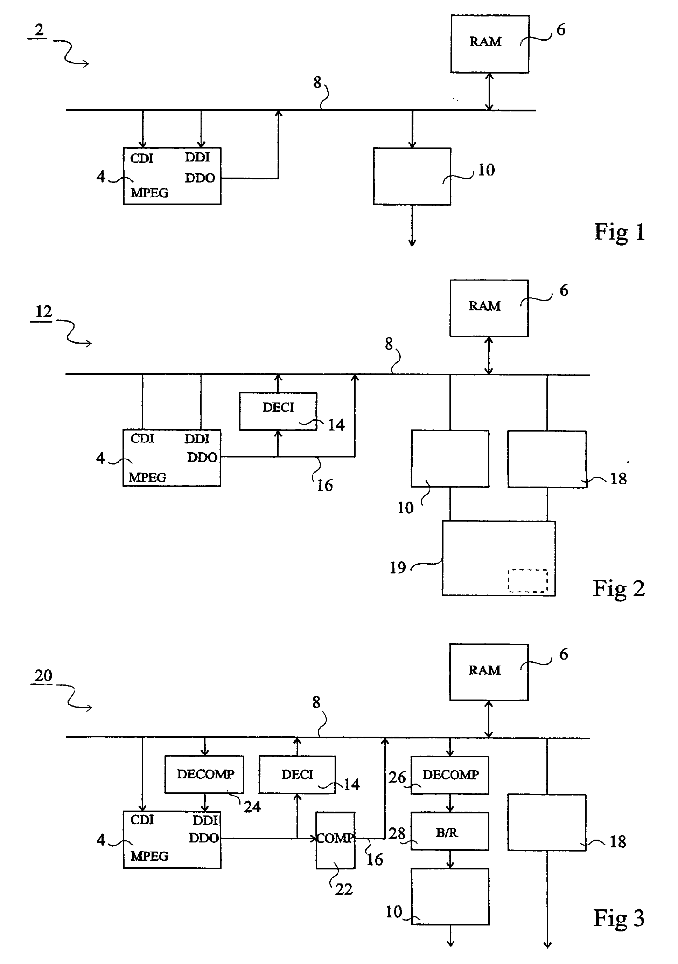

La figure 1 représente de manière très schématique un circuit intégré 2 qui comprend un décodeur MPEG 4 connecté à un bus bidirectionnel 8 par une entrée de données codées CDI, une entrée de données décodées DDI et une sortie de données décodées DDO. Une mémoire 6 est également connectée de manière à pouvoir lire et écrire sur le bus 8, et un circuit d'affichage 10 est connecté pour pouvoir lire sur le bus 8.

La fonction du décodeur 4 est de décoder des images codées stockées dans la mémoire 6. Le décodeur doit, pour décoder certaines images, utiliser deux images (intra/prédite) décodées au préalable. Ces deux images sont stockées dans la mémoire 6 après leur décodage par le décodeur 4. D'autre part, une image décodée par le décodeur 4 n'est pas lue immédiatement par le circuit d'affichage 10, mais est stockée temporairement dans la mémoire 6. Ainsi, la mémoire 6 doit pouvoir contenir, en plus des images codées, trois images décodées. Le circuit d'affichage 10 affiche chaque image décodée en la lisant rangée par rangée dans la mémoire 6. Les données lues rangée par rangée sont notamment filtrées et synchronisées de manière à être affichables directement, par exemple par un écran de télévision.

De nombreux récepteurs de télévision analogiques proposent, en plus de l'affichage d'une image principale, l'affichage d'une sous-image, ou image incrustée, sur une fraction de l'écran. On souhaite également, en télévision numérique, réaliser un circuit de décodage de séquences d'images codées selon la norme MPEG, qui permette d'afficher simultanément une image incrustée et une image principale. Une solution évidente consisterait à dupliquer le circuit 2 pour décoder et afficher respectivement les images principales et les images à incruster. Cette solution, amènerait à augmenter beaucoup le coût d'un récepteur de télévision, d'autant plus que le circuit associé à l'image à incruster devra être encore plus rapide que le circuit classique puisque les données associées à une image à incruster, de hauteur inférieure à la hauteur normale d'une image, sont en même nombre que les données associées à une image normale mais doivent être lues en une fraction de la durée normale de balayage d'une image.

Un objet de la présente invention est de prévoir un circuit électronique permettant de décoder et d'afficher une image principale et une image incrustée en partageant l'utilisation d'un seul décodeur MPEG et d'une seule mémoire.

Un autre objet de la présente invention est de prévoir un tel circuit en limitant les exigences de dimension de mémoire et de vitesse de lecture en mémoire liées au partage de la mémoire.

Pour atteindre ces objets, la présente invention prévoit un circuit électronique selon la revendication 1.

Selon un mode de réalisation de la présente invention, le circuit électronique comprend également un circuit de compression connecté dans le premier chemin, un premier circuit de décompression connecté entre le bus et l'entrée de données décodées du décodeur, et un second circuit de décompression, suivi d'un circuit de conversion bloc/rangées, connecté entre le bus et le premier circuit d'affichage.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente schématiquement un circuit de décodage MPEG pour l'affichage d'images principales uniquement ;
la figure 2 représente schématiquement un premier mode de réalisation d'un circuit de décodage MPEG pour l'affichage d'images principales et d'images incrustées selon la présente invention ; et
la figure 3 représente schématiquement un second mode de réalisation d'un circuit de décodage MPEG pour l'affichage d'images principales et d'images incrustées selon la présente invention.

De mêmes références désignent de mêmes éléments dans les figures 1 à 3.

La figure 2 représente schématiquement un circuit intégré 12 semblable au circuit 2 de la figure 1, utilisant un seul décodeur, qui permet de décoder et d'afficher une image principale et une image incrustée à partir de séquences d'images codées selon la norme MPEG. Le circuit 12 comprend en plus des éléments du circuit 2 un circuit "décimateur" ou filtre numérique 14 relié entre le bus 8 et la sortie DDO du décodeur 4, en parallèle avec un bus 16 simple. Un second circuit d'affichage 18 est également relié au bus 8. Les circuits d'affichage 10 et 18 sont classiquement reliés à un même dispositif d'affichage tel qu'un écran 19.

Dans le circuit 12, les images principales sont décodées, stockées, et affichées de la manière décrite précédemment en utilisant le bus 16. Par contre, les images à incruster doivent subir une réduction de taille, ou "décimation" entre leur décodage et leur affichage. En effet, les images à incruster sont des images qui ont à l'origine la même taille que les images principales, mais qui doivent être affichées par le circuit d'affichage 18 avec une taille réduite. Le circuit décimateur 14 a ainsi pour fonction de ne produire qu'un pixel pour n, n étant le rapport de réduction désiré de l'image décodée à incruster. Une image à incruster décodée et "décimée" écrite dans la mémoire 6 par le circuit décimateur 14 peut être lue et affichée directement par le circuit d'affichage 18, qu'elle soit de type "intra", "prédite" ou "bidirectionnelle". Cependant, une image intra ou prédite décodée ne peut plus être utilisée par le décodeur 4 une fois qu'elle a été décimée alors que, comme on l'a indiqué précédemment, ces images sont nécessaires au décodage des images bidirectionnelles. Ainsi, lorsqu'une image à incruster prédite ou intra est décodée, elle est à la fois stockée en mémoire 6 sous forme non décimée, directement à travers le bus 16, en vue d'une utilisation ultérieure par le décodeur 4, et sous forme décimée en vue d'un affichage ultérieur. Lorsqu'une image à incruster bidirectionnelle est décodée, elle est stockée en mémoire 6 sous forme décimée uniquement, en vue d'un affichage ultérieur. On notera que des mémoires tampons (non représentées) sont situées entre le bus 8 et le bus 16, ainsi qu'en sortie du circuit décimateur 14, pour stocker temporairement la forme décimée et la forme non décimée de chaque image à incruster décodée jusqu'à ce qu'elles soient écrites dans la mémoire 6.

Le circuit 12 doit fonctionner suffisamment rapidement pour décoder et afficher une image principale et une image à incruster en une période d'affichage. Pour cela :
- en la durée d'une période d'affichage, le décodeur 4 doit pouvoir décoder une image principale et une image à incruster, c'est-à-dire lire dans la mémoire 6 deux images codées et quatre images décodées et y écrire deux images décodées et une image décodée décimée ;
- en la durée d'une période d'affichage, le circuit d'affichage 10 doit pouvoir lire en mémoire 6 une image décodée ;
- à la même vitesse, le circuit d'affichage 18 doit pouvoir lire en mémoire 6 une image décodée décimée. En effet, l'affichage de l'image à incruster se fait sur une partie seulement de l'écran, et dure moins longtemps que la période d'affichage d'une image sur tout l'écran, mais il y a moins de données à lire puisque les données d'image ont été préalablement décimées. En d'autres termes, le rapport entre le nombre de données à lire et la durée dont on dispose pour les lire est réduit. C'est là un premier avantage de la présente invention par rapport au cas où l'on réalise une mémorisation d'images non décimées : il n'est pas nécessaire de lire très rapidement toute une image non décimée pour n'en afficher qu'une partie. En conséquence, le circuit selon la présente invention peut seulement avoir une vitesse deux fois supérieure à celle d'un circuit normal. En d'autres termes, le circuit selon la présente invention peut disposer d'une bande passante mémoire instantanée qui n'est que deux fois supérieure à celle d'un circuit normal.

Selon un deuxième aspect de la présente invention, on cherche à réduire encore cette vitesse en adjoignant au circuit de la figure 2 des moyens de compression/décompression.

La figure 3 représente de manière schématique un circuit intégré 20 permettant cette réduction de vitesse et comprenant, en plus des éléments du circuit 12, un circuit de compression 22, des circuits de décompression 24 et 26 et un circuit de conversion bloc/rangée 28. Le circuit de compression 22 est connecté entre la sortie DDO du décodeur 4 et le bus 16. Les circuits de décompression 24 et 26 sont connectés entre le bus 8 et respectivement l'entrée DDI du décodeur 4 et le circuit d'affichage 10. Le circuit de compression utilise un algorithme connu pour réduire la taille occupée en mémoire par les images décodées non décimées. Une image compressée doit être décompressée par un des circuits de décompression 24 ou 26 avant de pouvoir être utilisée respectivement par le décodeur 4 et par le circuit d'affichage 10. On notera que les données décompressées sont classiquement produites sous forme de blocs alors que le circuit d'affichage 10 utilise des données sous forme de rangées. Ainsi, le circuit de conversion bloc/rangée 28 est placé en sortie du circuit de décompression 26.

Si l'on appelle k le rapport de compression des images par le compresseur 22, une image décodée compressée, stockée en mémoire 6, peut être écrite et lue avec une vitesse k fois inférieure à celle qui est nécessaire pour écrire et lire des images non compressées. D'autre part, les images décodées compressées ayant une taille réduite k fois, la taille de la mémoire 6 peut être réduite. Le circuit 20 permet ainsi d'utiliser une mémoire 6 sensiblement k fois plus lente, et moins coûteuse que celle du circuit 12.

Par exemple, une image à incruster qui nécessite classiquement 3 x 24 = 72 mégabits en mémoire peut, selon l'invention, être stockée dans 2 x 24/4 mégabits pour les 2 images compressées avec une valeur k=4 plus 3 x (24/16) mégabits pour les trois images décimées avec un facteur 4 pour la hauteur comme pour la largeur, soit un total de 16,5 mégabits.

On notera que l'utilisation des circuits de compression/décompression selon la présente invention est particulièrement avantageuse par rapport à leur utilisation avec, par exemple, un circuit tel que celui de la figure 1 dupliqué pour afficher les images principales et incrustées. Une telle utilisation permettrait de diviser par k la vitesse de fonctionnement des mémoires du circuit dupliqué. Cependant, elle demanderait d'utiliser dans la chaîne d'affichage des images à incruster des circuits suffisamment rapides pour décompresser et convertir de blocs à rangées les images à incruster en une fraction de la durée normale de balayage d'une trame. De tels circuits, particulièrement complexes à mettre en oeuvre, ne sont pas nécessaires selon la présente invention.

Bien entendu, la présente invention est susceptible de diverses variantes et modifications qui apparaîtront à l'homme de l'art. A titre d'exemple, on pourra envisager un circuit dans lequel les images décodées destinées à être affichées comme images principales pourront être stockées sous forme non-compressée. Cela permettra de simplifier leur chaîne d'affichage en supprimant le circuit de décompression 26 et le circuit de conversion bloc/rangée 28, au prix d'un accroissement de la taille et de la vitesse de la mémoire 6. On pourra également envisager de compresser les images à incruster décodées stockées en mémoire, ce qui permettra de raccourcir leurs temps d'écriture et de lecture, et de diminuer encore la vitesse de fonctionnement de la mémoire au prix d'un accroissement de la complexité du circuit. D'autre part, la mémoire 6 pourra indifféremment être une mémoire interne du circuit ou une mémoire externe, par exemple reliée au bus 8 par un accès parallèle.

## Revendications

1. Circuit électronique comprenant :
une mémoire (6) connectée pour être accessible en lecture et en écriture depuis un bus bidirectionnel (8),
un décodeur MPEG (4) ayant une entrée de données d'image codées (CDI) correspondant à une première image ou à une deuxième image et une entrée de données d'image décodées (DDI), les données d'image décodées correspondant à des suites de pixels et les entrées du décodeur étant reliées au bus de manière à pouvoir lire dans la mémoire, et ayant une sortie de données d'image décodées (DDO) connectée au bus selon un premier chemin (16) de manière à pouvoir écrire dans la mémoire des données de la première première image,
un circuit d'affichage de première image (10) dont une entrée est reliée audit bus de manière à lire dans la mémoire les données de la première image écrites par le décodeur,
un filtre numérique (14) produisant un pixel parmi toute suite d'un nombre prédéterminé de pixels, connecté entre la sortie (DDO) du décodeur et ledit bus (8) selon un second chemin de manière à pouvoir écrire dans la mémoire des données de la deuxième image, et
un circuit d'affichage de deuxième image (18) dont une entrée est connectée audit bus de manière à lire dans la mémoire les données écrites par le filtre,
ce circuit électronique étant configuré pour écrire dans la mémoire des données de deuxième image à la fois sous une forme filtrée, à travers le second chemin, et sous une forme non filtrée, directement à travers le premier chemin (16), lorsque la deuxième image est intra ou prédite, et étant configuré pour écrire dans la mémoire des données de deuxième image uniquement sous une forme filtrée, à travers le second chemin, lorsque la deuxième image est bidirectionnelle.

2. Circuit électronique selon la revendication 1, **caractérisé en ce qu'**il comprend :
un circuit de compression (22) connecté dans le premier chemin,
un premier circuit de décompression (24) connecté entre ledit bus et l'entrée de données décodées (DDI) du décodeur, et
un second circuit de décompression (26), suivi d'un circuit de conversion bloc/rangées (28), connecté entre ledit bus et le premier circuit d'affichage (10).

## Claims

1. An electronic circuit including:
a memory (6) connected to be accessible in the read and write mode from a bidirectional bus (8),
an MPEG decoder (4) having a coded image data input (CDI) corresponding to a first image or a second image and a decoded image data input (DDI), the decoded image data corresponding to pixel sequences and the decoder inputs being connected to the bus to be able to read from the memory, and having a decoded image data output (DDO) connected to the bus according to a first path (16) to be able to write into the memory data of the first image,
a first image display circuit (10), an input of which is connected to said bus to be able to read from the memory the data of the first image written by the decoder,
a digital filter (14) providing one pixel among any sequence of a predetermined number of pixels, connected between the decoder output (DDO) and said bus (8) according to a second path to be able to write into the memory data of the second image, and
a second image display circuit (18), an input of which is connected to the bus to be able to read from the memory the data written by the filter,
said electronic circuit being configured to write in the memory data of the second image both in a filtered form, through the second path, and in an unfiltered form, directly through the first path (16), when the second image is intra or predicted, and being configured to write in the memory data of the second image only in a filtered form, through the second path, when the second image is bidirectional.

2. The electronic circuit of claim 1, including:
a compression circuit (22) connected in the first path,
a first decompression circuit (24) connected between the bus and the decoded data input (DDI) of the decoder, and
a second decompression circuit (26), followed by a block-to-row conversion circuit (28), connected between the bus and the first display circuit (10).

## Patentansprüche

1. Ein elektronischer Schaltkreis, der Folgendes aufweist:
einen Speicher (6), der so geschaltet ist, dass auf ihn sowohl im Leseals auch im Schreibmodus von einem bidirektionalen Bus (8) zugegriffen werden kann,
einen MPEG Decoder (4) mit einem codierte-Bilddaten-Eingang (CDI = coded image data input) entsprechend einem ersten Bild oder einem zweiten Bild und einem decodierte-Bilddaten-Eingang (DDI = decoded image data input), wobei die decodierten Bilddaten Pixelsequenzen entsprechen und die Decodereingänge mit dem Bus verbunden sind, um von dem Speicher lesen zu können, und mit einem decodierte-Bilddaten-Ausgang (DDO = decoded image data output), der mit dem Bus verbunden ist, entsprechend einem ersten Pfad (16), um in den Speicher Daten des ersten Bildes schreiben zu können,
einen ersten Bildanzeigeschaltkreis (10), wobei ein Eingang desselben mit dem Bus verbunden ist, um die Daten des ersten Bildes, die von dem Decoder geschrieben wurden, von dem Speicher zu lesen,
einen digitalen Filter (14), der ein Pixel unter jeder Sequenz einer vorbestimmten Anzahl von Pixel bereitstellt, und der zwischen den Decoderausgang (DDO) und den Bus (8) geschaltet ist, entsprechend einem zweiten Pfad, um Daten des zweiten Bildes in den Speicher schreiben zu können, und
einen zweiten Bildanzeigeschaltkreis (18), wobei ein Eingang desselben mit dem Bus verbunden ist, um die Daten, die von dem Filter geschrieben wurden, von dem Speicher zu lesen, wobei
der elektronische Schaltkreis derart konfiguriert ist, um in den Speicher Daten des zweiten Bildes zu schreiben, sowohl in einer gefilterten Form, über den zweiten Pfad, als auch in einer ungefilterten Form, direkt über den ersten Pfad (16), wenn das zweite Bild intra oder predicted ist, und derart konfiguriert ist, um Daten des zweiten Bildes nur in gefilterter Form, über den zweiten Pfad, in den Speicher zu schreiben, wenn das zweite Bild bidirektional ist.

2. Der elektronische Schaltkreis nach Anspruch 1, der ferner Folgendes aufweist:
einen Kompressionsschaltkreis (22) der in den ersten Pfad geschaltet ist,
einen ersten De-Kompressionsschaltkreis (24), der zwischen den Bus und den decodierte-Dateneingang (DDI) des Decoders geschaltet ist, und
einen zweiten De-Kompressionsschaltkreis (26), gefolgt von einem Block-zu-Reihe Umwandlungsschaltkreis (28), der zwischen den Bus und den ersten Anzeigeschaltkreis (10) geschaltet ist.
